# EUROPEAN PATENT APPLICATION

(11) **EP 4 842 051 A1**
(43) Date of publication of application: **18.11.2026**
(21) Application number: 24921646.6
(22) Date of filing: 20.11.2024
(51) Int. Cl.: H04W 28/14

(54) **COMMUNICATION DATA EXCHANGE METHOD, COMMUNICATION APPARATUS, CHIP AND COMMUNICATION SYSTEM**

(30) Priority: 30.01.2024 CN 202410139910
(71) Applicant: Huawei Technologies Co., Ltd., Shenzhen, Guangdong 518129 (CN)
(72) Inventor: SONG, Chuang, Shenzhen, Guangdong 518129 (CN); LIANG, Yu, Shenzhen, Guangdong 518129 (CN)
(74) Representative: Gill Jennings & Every LLP
(86) International application number: PCT/CN2024/133301
(87) International publication number: WO 2025/161624

(57) **Abstract**

This application provides a communication data exchange method, a communication apparatus, a chip, and a communication system, applied to the field of chip technologies, to resolve routing deadlock in a 2D-mesh network. In the communication data exchange method, a memory in a network node is divided into a plurality of ingress buffers. Each ingress buffer includes a plurality of first storage areas. Each ingress buffer is configured to store a plurality of ingress buffer queues of one interface. Each first storage area is used to store a plurality of ingress buffer queues of a same destination interface, and each ingress buffer queue corresponds to one routing type. After obtaining a data packet received through each interface, a processor in the network node may store the data packet in a corresponding ingress buffer queue in the memory, so that impact caused by routing deadlock is resolved in an isolated storage manner, therefore improving data transmission reliability of the 2D-mesh network.

## Description

This application claims priority to Chinese Patent Application No. 202410139910.1, filed with the China National Intellectual Property Administration on January 30, 2024 and entitled "COMMUNICATION DATA EXCHANGE METHOD, COMMUNICATION APPARATUS, CHIP, AND COMMUNICATION SYSTEM", which is incorporated herein by reference in its entirety.

### TECHNICAL FIELD

This application relates to the field of chip technologies, and in particular, to a communication data exchange method, a communication apparatus, a chip, and a communication system.

### BACKGROUND

In an existing communication system, data exchange between terminal devices is usually implemented via a data exchange network formed by a plurality of network nodes. To ensure that data packets in a high-speed data transmission environment can be transmitted in order, a buffer is set in each network node to store a to-be-forwarded data packet. In a 2D-mesh network, data transmission is performed through edges between network nodes. When a node needs to transmit a data packet to an adjacent node, the node may choose to transmit the data packet through a north, south, west, or east edge. However, currently, data packets transmitted in the 2D-Mesh network are prone to routing deadlock.

### SUMMARY

This application provides a communication data exchange method, a communication apparatus, a chip, and a communication system, to resolve routing deadlock in a 2D-mesh network.

According to a first aspect, a communication data exchange method is provided, where the method is applied to a network node. The network node includes a plurality of interfaces, a memory, and a processor. The processor is separately coupled to the memory and the plurality of interfaces. The communication data exchange method may be performed based on the processor, and a performing process of the method includes: obtaining a first data packet received through a first interface in the plurality of interfaces; and storing the first data packet in a corresponding ingress buffer queue in the memory based on a routing type and a destination interface of the first data packet, where the memory includes a plurality of ingress buffers, each ingress buffer corresponds to one of the plurality of interfaces, each ingress buffer includes a plurality of first storage areas, each first storage area is used to store a plurality of ingress buffer queues of a same destination interface, and each ingress buffer queue corresponds to one routing type; the destination interface is any interface other than an ingress interface of the data packet in the plurality of interfaces; and the routing type includes deterministic routing and adaptive routing, the deterministic routing is routing for forwarding a data packet with a same source address and destination address via a fixed network node, and the adaptive routing is routing for determining a next-hop network node based on congestion of each of a plurality of interfaces. In a 2D-mesh network, routing deadlock is mainly caused by the adaptive routing, and a proportion of the adaptive routing is small. In the foregoing manner, a data packet of the adaptive routing and a data packet of the deterministic routing may be stored in different ingress buffer queues, so that the data packet of the adaptive routing can be stored in sufficient storage space, to avoid the routing deadlock caused by mutual impact between the data packet of the adaptive routing and the data packet of the deterministic routing. Based on this, compared with that of an existing manner in which the data packet of the adaptive routing and the data packet of the deterministic routing are stored in a same ingress buffer queue, the routing deadlock occurring in a data packet transmission process can be better avoided.

In a possible implementation, when the foregoing method is performed, the processor may further determine the routing type of the first data packet based on a source address and a destination address of the first data packet and location information of the network node, and determine the destination interface of the first data packet based on the destination address of the first data packet and the location information of the network node. In the foregoing manner, each data packet can be more accurately stored in a corresponding ingress buffer queue.

In a possible implementation, an ingress buffer queue of the deterministic routing includes a plurality of ingress buffer queues for different turning directions, where the turning direction is a direction of a destination network node, corresponding to a destination address of a data packet, relative to the destination interface of the network node. When the foregoing method is performed, the processor may further determine a turning direction of the first data packet based on the destination address of the first data packet and the location information of the network node. Then, the first data packet is stored in the corresponding ingress buffer queue based on the turning direction. In the foregoing manner, the ingress buffer queues for different turning directions may be further stored in an isolated manner, to avoid that a backpressure signal generated by a downstream network node of the foregoing network node affects an irrelevant data packet. This reduces impact of network congestion and improves transmission efficiency of the data packet.

In a possible implementation, the first storage area is further used to store an ingress buffer queue of the deterministic routing converted from the adaptive routing; and the first data packet further includes a conversion identifier indicating conversion from the adaptive routing to the deterministic routing. When the foregoing method is performed, the first data packet may be further stored in the corresponding ingress buffer queue based on the source address, the destination address, and the conversion identifier of the first data packet, and the location information of the network node. In the foregoing manner, if a forwarding manner of the data packet is converted from a forwarding manner of the adaptive routing to a forwarding manner of the deterministic routing, the data packet may be stored in a separate ingress buffer queue, to avoid occupying space of another buffer queue, and better prevent routing deadlock.

In a possible implementation, the method further includes: obtaining a second data packet to be output through a second interface in the plurality of interfaces, where the second data packet is a data packet whose destination interface is the second interface and that is obtained from a corresponding storage area in an ingress buffer of another interface other than the second interface; and storing the second data packet in an egress buffer queue corresponding to the second interface in the memory based on a routing type of the second data packet, where the memory includes a plurality of egress buffers, each egress buffer corresponds to one of the plurality of interfaces, each egress buffer includes a plurality of second storage areas, each second storage area is used to store an egress buffer queue of one routing type, and the routing type includes the deterministic routing and the adaptive routing. Based on this, different types of buffer queues in the egress buffer of each interface do not affect each other, so that routing deadlock can be prevented in an isolated storage manner.

In a possible implementation, an egress buffer queue of the deterministic routing includes a plurality of egress buffer queues for different turning directions. When the second data packet is a data packet of the deterministic routing, the second data packet may be stored, based on the routing type and a turning direction of the second data packet, in the egress buffer queue corresponding to the deterministic routing of the second interface. In the foregoing manner, data packets of the deterministic routing may be respectively stored in different egress buffer queues based on the turning directions, so that transmission of data packets in other turning directions is not affected when network congestion occurs in an egress buffer queue in a specific turning direction. This improves transmission efficiency of the data packets.

In a possible implementation, the method further includes: obtaining first configuration information, where the first configuration information includes an indication of a storage manner of an ingress buffer queue; and configuring the plurality of ingress buffers in the memory based on the first configuration information. In the foregoing process, a configuration manner of the ingress buffer may be stored in advance in a manner of the configuration information. The memory can be directly configured based on the configuration information after the network node is powered on. This improves operation efficiency.

In a possible implementation, the first configuration information further includes an indication of a storage manner of an egress buffer queue. Based on this, the method further includes: configuring the plurality of egress buffers in the memory based on the first configuration information.

According to a second aspect, a communication apparatus is provided. The communication apparatus includes a plurality of interfaces, a memory, and a processor. The processor is separately coupled to the memory and the plurality of interfaces, where the memory includes a plurality of ingress buffers, each ingress buffer corresponds to one of the plurality of interfaces, each ingress buffer includes a plurality of first storage areas, each first storage area is used to store a plurality of ingress buffer queues of a same destination interface, and each ingress buffer queue corresponds to one routing type; the destination interface is any interface other than an ingress interface of a data packet in the plurality of interfaces; the routing type includes deterministic routing and adaptive routing, the deterministic routing is routing for forwarding a data packet with a same source address and destination address via a fixed communication apparatus; and the adaptive routing is routing for determining a next-hop communication apparatus based on congestion of each of the plurality of interfaces. Each ingress buffer queue is configured to store a data packet of a corresponding destination interface and a corresponding routing type.

In a possible implementation, the processor is configured to store a first data packet in a corresponding ingress buffer queue in the memory based on a routing type and a destination interface of the first data packet.

In a possible implementation, the processor is further configured to: determine the routing type of the first data packet based on a source address and a destination address of the first data packet and location information of the communication apparatus; and determine the destination interface of the first data packet based on the destination address of the first data packet and the current location information of the communication apparatus.

In a possible implementation, an ingress buffer queue of the deterministic routing includes a plurality of ingress buffer queues for different turning directions, where the turning direction is a direction of a communication apparatus, corresponding to a destination address of a data packet, relative to a destination interface of the communication apparatus. Based on this, the processor is further configured to: determine a turning direction of the first data packet based on the destination address of the first data packet and the location information of the communication apparatus; and store the first data packet in the corresponding ingress buffer queue based on the turning direction.

In a possible implementation, each first storage area is further used to store an ingress buffer queue of the deterministic routing converted from the adaptive routing. The first data packet further includes a conversion identifier indicating conversion from the adaptive routing to the deterministic routing. Based on this, the processor is further configured to: store the first data packet in the corresponding ingress buffer queue based on the source address, the destination address, and the conversion identifier of the first data packet, and the location information of the communication apparatus.

In a possible implementation, the processor is further configured to: obtain a second data packet to be output through a second interface in the plurality of interfaces, where the second data packet is a data packet whose destination interface is the second interface and that is obtained from a corresponding storage area in an ingress buffer of another interface other than the second interface; and store the second data packet in an egress buffer queue corresponding to the second interface in the memory based on a routing type of the second data packet, where the memory includes a plurality of egress buffers, each egress buffer corresponds to one of the plurality of interfaces, each egress buffer includes a plurality of second storage areas, each second storage area is used to store an egress buffer queue of one routing type, and the foregoing routing type includes the deterministic routing and the adaptive routing.

In a possible implementation, an egress buffer queue of the deterministic routing includes a plurality of egress buffer queues for different turning directions, and when the second data packet is a data packet of the deterministic routing, the processor is specifically configured to store, based on the routing type and a turning direction of the second data packet, the second data packet in the egress buffer queue corresponding to the deterministic routing of the second interface.

In a possible implementation, the processor is further configured to: obtain first configuration information, where the first configuration information includes an indication of a storage manner of an ingress buffer queue, and configure the plurality of ingress buffers in the memory based on the first configuration information.

In a possible implementation, the first configuration information further includes an indication of a storage manner of an egress buffer queue. The processor is further configured to configure the plurality of egress buffers in the memory based on the first configuration information.

According to a third aspect, a chip is provided. The chip includes a plurality of bare dies, where the plurality of bare dies form a 2D-mesh network, and each bare die is the communication apparatus in any one of the possible implementations of the second aspect.

According to a fourth aspect, a computer-readable storage medium is provided. The computer-readable storage medium stores computer program instructions. When the computer program instructions are executed by a processor, the method in any one of the possible implementations of the first aspect is implemented.

According to a fifth aspect, a communication system is provided. The communication system includes a plurality of switching devices, where the plurality of switching devices form a 2D-mesh network, and each switching device is the communication apparatus in any one of the possible implementations of the second aspect.

According to a sixth aspect, a computer program product is provided. When the computer program product is executed by a processor, the method in any one of the possible implementations of the first aspect is implemented.

For technical effect brought by the second aspect to the sixth aspect and the possible implementations, refer to descriptions of technical effect brought by the first aspect and the possible implementations. Details are not described herein again.

### BRIEF DESCRIPTION OF DRAWINGS

FIG. 1 is a diagram of a structure of a 2D-mesh network according to an embodiment of this application;
FIG. 2 is a diagram of a structure of a network-on-chip according to an embodiment of this application;
FIG. 3 is a diagram of a structure of a communication system according to an embodiment of this application;
FIG. 4 is a diagram of deadlock routing according to an embodiment of this application;
FIG. 5A to FIG. 5E are diagrams of turning manners for avoiding deadlock routing according to an embodiment of this application;
FIG. 6 is a schematic flowchart of a communication data exchange method according to an embodiment of this application;
FIG. 7 is a diagram of a storage manner of an ingress buffer queue according to an embodiment of this application;
FIG. 8 is a schematic flowchart of another communication data exchange method according to an embodiment of this application;
FIG. 9 is a diagram of a storage manner of an egress buffer queue according to an embodiment of this application;
FIG. 10A and FIG. 10B are diagrams of buffer setting manners of an interface according to an embodiment of this application;
FIG. 11 is a diagram of a backpressure transfer relationship in a network node according to an embodiment of this application; and
FIG. 12 is a diagram of a backpressure transfer relationship between network nodes according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in the embodiments of this application, terms such as "first" and "second" do not limit a quantity or an execution sequence.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a related concept in a specific manner.

The following describes this application in detail with reference to the accompanying drawings and embodiments.

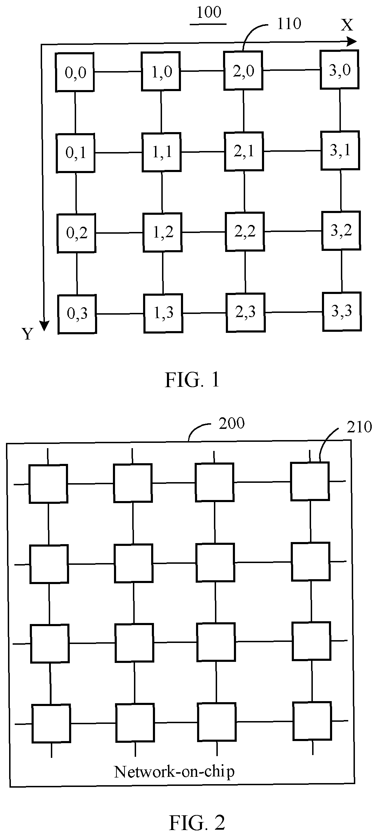

As shown in FIG. 1, a 2D-mesh network 100 is a common network structure, and has advantages such as simplicity, easy implementation, low latency, high bandwidth, and good scalability. Generally, the 2D-mesh network 100 may be considered as a two-dimensional gridlike network structure, and includes a plurality of communication apparatuses 110. Each communication apparatus 110 may be used as a network node (hereinafter collectively referred to as a network node), and has fixed location coordinates in the 2D-mesh network 100. The location coordinates may be a horizontal coordinate and a vertical coordinate of the communication apparatus 110 used as the network node in the 2D-mesh network, and are generally represented by (X,Y). An operator may set corresponding horizontal coordinates and vertical coordinates for each network node based on a defined two-dimensional coordinate system, so as to set fixed location coordinates for each network node. For example, still as shown in FIG. 1, a network node in an upper left corner of the 2D-mesh network may be used as an origin (0,0), a direction of a network node on a right side of the network node is considered as an X direction, a direction of a network node below the network node is considered as a Y direction, and corresponding location coordinates are set for each network node in the 2D-mesh network. Certainly, the foregoing manner of setting the location coordinates is merely an example implementation provided for ease of understanding. During specific implementation, corresponding location coordinates may be set for each network node in the 2D-mesh network based on an actual requirement.

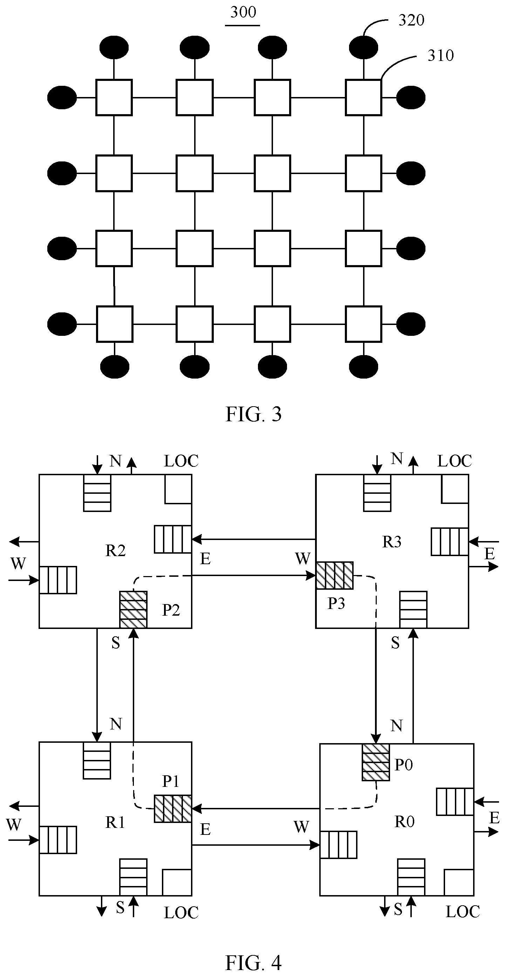

Further, in the 2D-mesh network, a connection between network nodes is implemented through an edge. Each communication apparatus 110 is directly connected to a maximum of four adjacent network nodes in four directions (up, down, left, and right). A network node above a network node may be referred to as a north adjacent node of the network node, a network node below the network node may be referred to as a south adjacent node of the network node, a network node on the left of the network node may be referred to as a west adjacent node of the network node, and a network node on the right of the network node may be referred to as an east adjacent node of the network node. In the 2D-mesh network, data transmission is also performed through edges between network nodes. When a network node needs to transmit data to an adjacent network node, the network node may select to transmit the data through an edge in a north, south, west, or east direction. This has advantages such as low latency and high bandwidth. Therefore, the 2D-mesh network is widely used in different application scenarios. In different application scenarios, product forms of the 2D-mesh network are also different. For example, as shown in FIG. 2, in a network-on-chip (network-on-chip, NOC) scenario, the 2D-mesh network generally includes a plurality of bare dies 210 (chiplets) that are disposed on a chip 200 and that have a switching/routing function. In addition, the bare dies 210 disposed on a periphery of the chip 200 may be coupled to one or two execution units disposed on the chip 200, and the execution units may perform data interaction over the 2D-mesh network. Each bare die 210 may be considered as an independent communication apparatus, and may be used as a network node in the 2D-mesh network. The chip 200 may be a switch chip, a router chip, a computer chip, or another type of system on chip (system on chip, SOC). As shown in FIG. 3, in a device networking scenario, the 2D-mesh network generally includes a plurality of switching devices 310, and each switching device 310 on the periphery of the 2D-mesh network may be coupled to one or two terminal devices 320 to form a communication system 300. The terminal devices 320 may form a 2D-mesh network via the plurality of switching devices 310 to perform data interaction. Each switching device is an independent communication apparatus, and may be used as a network node in the 2D-mesh network. The switching device 310 may be a device having a data exchange capability, such as a switch or a router.

In a current 2D-mesh network, there are mainly two routing manners for a data packet: deterministic routing and adaptive routing. The deterministic routing is routing for forwarding a data packet with a same source address and destination address via a fixed network node. The adaptive routing is routing for determining a next-hop network node of a data packet based on congestion of each interface of a network node. The deterministic routing has fewer transmission hops than the adaptive routing. The deterministic routing has higher transmission efficiency when the data amount is small. Although routing deadlock does not occur, a buffer queue of a corresponding interface in a network node using the deterministic routing is prone to congestion when the data amount is excessively large. This reduces transmission efficiency of data packets. When congestion occurs on a specific interface of the network node, the adaptive routing may be used to select another network node to continue to transmit the data packet to the destination node. Therefore, to improve transmission efficiency of the data packets, in many cases, the 2D-mesh network selects to transmit the data packets in a manner of using both the deterministic routing and the adaptive routing. However, currently, a network node usually uses a single buffer queue to store both the data packet of the deterministic routing and the data packet of the adaptive routing. In this case, routing deadlock is likely to occur in the manner of the adaptive routing. The data packet of the deterministic routing is also affected when the routing deadlock occurs. For example, as shown in FIG. 4, four network nodes are used as an example. Each network node has a north, south, west, or east interface (that is, an N interface, an S interface, a W interface, or an E interface) and a local interface LOC. Data packets P0, P1, P2, and P3 are respectively stored in buffer queues of the network nodes R0, R1, R2, and R3. A destination of the data packet P0 is R2, a destination of the data packet P1 is R3, a destination of the data packet P2 is R0, and a destination of the data packet P3 is R1, so that the four network nodes form a routing loop. If none of the buffer queues of the four network nodes has extra space for storing another data packet, each network node sends a backpressure signal to a previous-hop network node of the network node, to indicate the previous-hop network node to stop transmitting the data packet. Based on this, on the basis that the four network nodes form the routing loop, the four data packets are all affected by the backpressure signal, so that none of the four data packets can apply for a buffer queue of a next-hop network node, and cyclic dependency is formed. As a result, the data packets cannot continue to be forwarded and routing deadlock is formed, causing network breakdown.

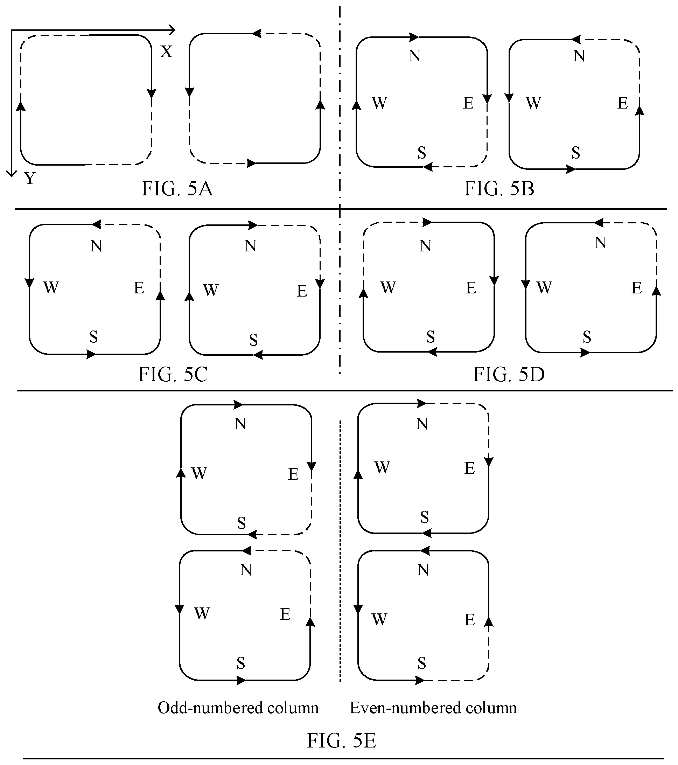

To resolve the foregoing problem, as shown in FIG. 5A to FIG. 5E, when data packets are transmitted in a manner of combining adaptive routing and deterministic routing, a routing loop can be avoided by limiting a data packet turning manner of some network nodes in a 2D-mesh network, so that cyclic dependency of data packets of a plurality of network nodes in the adaptive routing is avoided, thereby resolving the routing deadlock. Each dashed arrow in FIG. 5A to FIG. 5E is a prohibited turning direction of a data packet, and each solid arrow is a turning direction of a data packet. In an example, as shown in a part in FIG. 5A, a network node in the 2D-mesh network may transmit a data packet by using XY routing, so as to resolve the routing deadlock. When the data packet is transmitted by using the XY routing, the data packet is first transmitted along an X coordinate direction, and then the data packet is transmitted along a Y coordinate direction. In addition, the data packet transmitted along the Y coordinate direction is prohibited from being steered to the X coordinate direction for transmission, to avoid a routing loop formed by a plurality of routing nodes. In another example, as shown in a part in FIG. 5B, a network node in the 2D-mesh network may select a turning model with westward priority to transmit data packet. In other words, when transmitting the data packet, each network node in the 2D-mesh network may transmit the data packet in a turning direction of W to N->N to E->E to S, and is prohibited from transmitting the data packet in a turning direction of S to W. Alternatively, the data packet may be transmitted in a turning direction of W to S->S to E->E to N, and the data packet is prohibited from being transmitted in a turning direction of N to W. N represents north, S represents south, E represents east, and W represents west. The foregoing four directions may be defined by an operator for the 2D-mesh network based on an actual situation. In still another example, as shown in a part in FIG. 5C, a network node in the 2D-mesh network may further select a turning model with negative priority. In other words, when transmitting a data packet, each network node in the 2D-mesh network may transmit the data packet in a turning direction of W to S->S to E->E to N, and is prohibited from transmitting the data packet in a turning direction of N to W. Alternatively, the data packet may be transmitted in a turning direction of S to W->W to N->N to E, and the data packet is prohibited from being transmitted in a turning direction of E to S. In still another example, as shown in a part in FIG. 5D, a network node in the 2D-mesh network may further select a turning model with northward subsequence. In other words, when transmitting a data packet, each network node in the 2D-mesh network may transmit the data packet in a turning direction of E to S->S to W->W to N, and is prohibited from transmitting the data packet in a turning direction of N to E. Alternatively, the data packet may be transmitted in a turning direction of W to S->S to E->E to N, and the data packet is prohibited from being transmitted in a turning direction of N to W. In still another example, as shown in a part in FIG. 5E, the network node in the 2D-mesh network may further select a parity turning model. For example, when a network node in an odd-numbered column in the 2D-mesh network transmits a data packet, the data packet may be transmitted in a turning direction of W to N->N to E->E to S, and the data packet is prohibited from being transmitted in a turning direction of S to W. Alternatively, the data packet may be transmitted in a turning direction of N to S->S to E->E to N, and the data packet is prohibited from being transmitted in a turning direction of N to W. When a network node in an even-numbered column transmits a data packet, the data packet may be transmitted in a turning direction of S to W->W to N->N to E, and the data packet is prohibited from being transmitted in a turning direction of E to S. Alternatively, the data packet may be transmitted in a turning direction of N to W->W to S->S to E, and the data packet is prohibited from being transmitted in a turning direction of E to N. Although the routing deadlock can be resolved by using the solutions of the foregoing various turning models, the turning direction of the data packet is limited, causing imbalance in routing of network nodes and affecting selection of a plurality of paths.

In another solution, the routing deadlock may be resolved by selecting a manner of setting a virtual channel. The manner of setting the virtual channel (virtual channel, VC) is to avoid a deadlock by dividing virtual channels in different dimensions for a physical channel. When a loop occurs, the virtual tunnel (or escape tunnel) is switched to prevent the deadlock. For the existing virtual channel technical solution, in the 2D-mesh network, turning limitation is still required to implement adaptive deadlock-free routing. For example, when the virtual channel is set, the forbidden turning direction of the data packet may also be set in a manner similar to that in parts in FIG. 5B to FIG. 5D. Details are not described herein in this embodiment of this application. Because a specific turning direction is limited, the manner of setting the virtual channel also has a problem of uneven load between virtual channels, affecting selection of a multipath, and also increasing an area and power consumption.

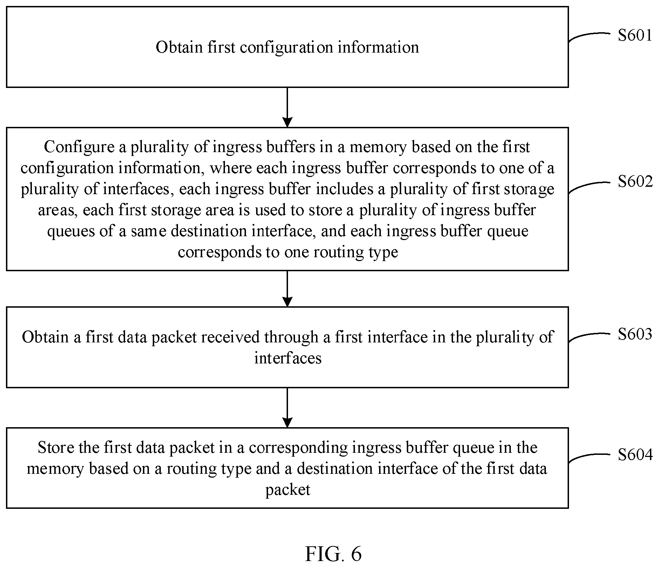

In an actual transmission process of a data packet in the 2D-mesh network, the data packet is mainly transmitted in the manner of the deterministic routing. A data packet in the adaptive routing accounts for a small proportion in an actual transmission process, but the adaptive routing may easily cause the routing deadlock. Therefore, to better resolve the foregoing problem, an embodiment of this application provides a communication data exchange method in which a turning direction of a data packet does not need to be limited, to resolve routing deadlock. In the communication data exchange method, an ingress buffer may be set for each interface of the network node in the memory. Each ingress buffer includes a plurality of storage areas. Each storage area is used to store a plurality of ingress buffer queues of a same destination interface, and each ingress buffer queue is used to store data packets of a same routing type. The destination interface is any interface other than the interface for inputting the data packet. The foregoing routing type includes deterministic routing and adaptive routing, and different routing types may correspond to different quantities of ingress buffer queues. For example, data packets of the adaptive routing may be stored by using one ingress buffer queue, and data packets of the deterministic routing may be stored by using one ingress buffer queue, or may be stored based on turning directions of the data packets by using a plurality of ingress buffer queues corresponding to different turning directions. In the isolated storage manner, the data packet of the adaptive routing and the data packet of the deterministic routing may be stored in different ingress buffer queues, so that the data packet of the adaptive routing can be stored in sufficient storage space, to avoid mutual impact between the data packet of the adaptive routing and the data packet of the deterministic routing. Compared with that of an existing manner in which the data packet of the adaptive routing and the data packet of the deterministic routing are stored in a same ingress buffer queue, the routing deadlock occurring in a data packet transmission process can be better avoided. The foregoing method may be executed by a processor inside the network node. The processor may be a central processing unit (central processing unit, CPU), a general-purpose processor, a network processor (network processor, NP), a field programmable gate array (field programmable gate array, FPGA), an application-specific integrated circuit (application-specific integrated circuit, ASIC), a system on chip (system on chip, SoC), or any combination thereof. During specific implementation, a type of the processor may be selected based on an actual application scenario. This is not specifically limited in this embodiment of this application. In the memory, an ingress buffer may be configured for each interface of the network node, or both an ingress buffer and an egress buffer may be configured. For example, the ingress buffer of the network node is used as an example. As shown in FIG. 6, a specific execution process of the method is as follows.

S601: The processor obtains first configuration information, where the first configuration information includes an indication of a storage manner of an ingress buffer queue.

In an implementation solution, an operator may write the first configuration information into a non-volatile memory in a manner of a computer program instruction. The processor inside the network node may read and execute the corresponding computer program instruction from the non-volatile memory after the network node is powered on, to obtain the first configuration information. The indication information in the first configuration information may indicate the processor to configure a plurality of ingress buffers in the memory, where each ingress buffer corresponds to one of a plurality of interfaces, each ingress buffer includes a plurality of first storage areas, and each first storage area is used to store a plurality of ingress buffer queues of a same destination interface. Each ingress buffer queue is used to store data packets of a same routing type. The destination interface is any interface other than the interface for inputting the data packet, and the routing type includes deterministic routing and adaptive routing. The deterministic routing is routing for forwarding a data packet via a fixed network node. The adaptive routing is routing for determining a next-hop network node of a data packet based on congestion of each interface of the network node. During specific implementation, the deterministic routing may use shortest-path routing, that is, Manhattan routing (Manhattan routing, MHD). Common algorithms include an XY routing algorithm, a YX routing algorithm, and the like. This is not specifically limited in embodiments of this application. The adaptive routing may determine congestion of each interface based on usage of an ingress buffer queue of the interface of the network node, and then use a network node connected to an interface with lowest buffer space usage as the next-hop network node. Certainly, the adaptive routing may alternatively determine the next-hop network node based on traffic, a transmission delay, a link status, and the like between network nodes. This is not specifically limited in embodiments of this application.

S602: The processor configures a plurality of ingress buffers in the memory based on the first configuration information.

Each ingress buffer corresponds to one of the plurality of interfaces, each ingress buffer includes a plurality of first storage areas, each first storage area is used to store a plurality of ingress buffer queues of a same destination interface, and each ingress buffer queue corresponds to one routing type.

In an implementation solution, after obtaining the first configuration information, the processor inside the network node may first divide the memory into the plurality of ingress buffers. Each ingress buffer corresponds to one of the plurality of interfaces. On this basis, each ingress buffer may be further divided into a plurality of first storage areas. Each first storage area is used to store a plurality of ingress buffer queues of a same destination interface, and each ingress buffer queue corresponds to a data packet of one routing type.

S603: The processor obtains a first data packet received through a first interface in the plurality of interfaces.

In a data packet transmission process, the first interface may be any one of the plurality of interfaces of the network node.

S604: The processor stores the first data packet in a corresponding ingress buffer queue in the memory based on a routing type and a destination interface of the first data packet.

In an implementation solution, the processor may determine the routing type of the first data packet based on a source address and a destination address of the first data packet and location information (that is, location coordinates) of the current network node. In an implementation, the processor may determine the destination interface of the first data packet based on the destination address of the first data packet and location information of the current network node, and then store the first data packet in the corresponding ingress buffer queue in the memory based on the determined routing type and the destination interface. In an example, the processor in each network node may determine the routing type of the first data packet by using a first lookup table. If the first data packet is a data packet of the deterministic routing, the processor may store the first data packet in an ingress buffer queue corresponding to the deterministic routing. If the first data packet is not a data packet of the deterministic routing, the processor may store the first data packet in an ingress buffer queue corresponding to the adaptive routing. The first lookup table may include routing types corresponding to search keywords including different source addresses and destination addresses and the location information of the current network node. After obtaining the first data packet, the processor may search the first lookup table based on a keyword including the source address and the destination address of the first data packet, and the location information of the current network node, to determine the routing type of the first data packet. Certainly, the processor of each network node may also execute a corresponding computer program by executing a routing algorithm by the network node, to perform calculation based on the source address and the destination address of the first data packet, and the location information of the current network node, so as to determine whether the first data packet is the data packet of the deterministic routing. For example, the XY routing is used as an example. The processor may separately compare the location coordinates of the current network node with location coordinates of the source address and location coordinates of the destination address, to determine whether the first data packet is the data packet of the deterministic routing. For example, location coordinates of a network node corresponding to the source address of the first data packet are (X1,Y1), location coordinates of the current network node are (X2,Y2), and location coordinates of a network node corresponding to the destination address of the first data packet are (X3,Y3), where X3>X2>X1, and Y3>Y2>Y1. Therefore, it can be determined that the data packet is not the data packet of the deterministic routing, and should be stored in the ingress buffer queue of the adaptive routing. Certainly, the foregoing is merely an example provided in this embodiment of this application. A specific calculation manner of the processor may be adaptively adjusted based on a type of the routing algorithm. Details are not described herein in this embodiment of this application.

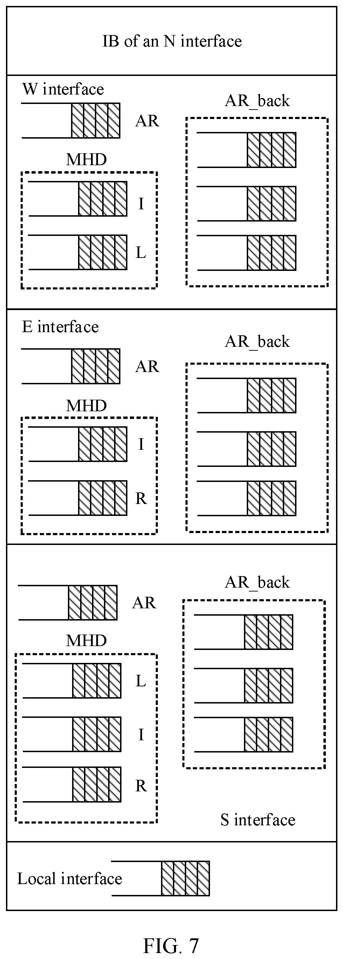

In an example, the processor in each network node may determine the destination interface of the first data packet by using a second lookup table. The second lookup table may include destination interfaces corresponding to search keywords including different destination addresses and the location information of the current network node. After obtaining the first data packet, the processor may form a search keyword based on the destination address of the first data packet and the location information of the current network node, to search the second search table for the corresponding destination interface. Certainly, the destination interface of the first data packet may alternatively be obtained through calculation based on the destination address of the first data packet and the location information of the current network node. For example, based on FIG. 1, the XY routing is used as an example. The processor may compare the location coordinates of the current network node with the location coordinates of the network node corresponding to the destination address, to determine the destination interface. For example, the location coordinates of the network node corresponding to the destination address of the first data packet are (Xd,Yd), and the location coordinates of the current network node are (X1,Y1). If Xd is greater than X1, the first data packet needs to be transmitted in an X coordinate direction. If the X coordinate direction is a direction in which an E interface of the network node is located, the destination interface of the first data packet is the E interface. Certainly, the foregoing calculation manner is merely an example provided in this embodiment of this application. During specific implementation, a calculation manner of a destination interface of each data packet may be adjusted based on an actually used routing algorithm and a coordinate system construction manner. Details are not described herein in this embodiment of this application. In the foregoing manner, the ingress buffer of each interface may be used to store the ingress buffer queue of each destination interface in an isolated manner, and the ingress buffer queue of each ingress buffer may be stored in an isolated manner based on a routing type, so as to resolve the routing deadlock. For example, as shown in FIG. 7, an ingress buffer (ingress buffer, IB) corresponding to an N interface of a network node is used as an example. The ingress buffer stores ingress buffer queues whose destination interfaces are an S interface, a W interface, and an E interface, and a local interface. The ingress buffer queue of each interface is further divided into an ingress buffer queue (that is, an MHD queue) of the deterministic routing and an ingress buffer queue (that is, an AR queue) of the adaptive routing based on the routing type. The network node may send a backpressure signal to an upstream network node based on the MHD queue, or may respond to a backpressure signal sent by a downstream network node. The AR queue does not respond to the backpressure signal generated by the downstream network node, and does not generate the backpressure signal to the upstream network node.

In an implementation solution, when the network node transmits the data packet in the manner of the deterministic routing, the MHD queue may send the backpressure signal to the upstream network node based on a buffer status of the ingress buffer queue, to indicate the upstream network node to stop transmitting the data packet, or may respond to the backpressure signal sent by the downstream network node and stop transmitting the data packet. In this case, if an MHD queue of a specific destination interface in the ingress buffer corresponding to the interface for inputting the data packet stores data packets in different turning directions, when the destination interface receives the backpressure signal, transmission of data packets in other turning directions in the MHD queue is stopped. This greatly affects transmission efficiency of the data packets. Therefore, as shown in FIG. 7, the MHD queue of each destination interface may be further divided into a plurality of ingress buffer queues for different turning directions, for example, a straight-through queue I, a left-turning queue L, and a right-turning queue R in the MHD queue in FIG. 7. The turning direction is a direction of a network node, corresponding to a destination address of the data packet, relative to a destination interface of the current network node. The plurality of ingress buffer queues for different turning directions may be stored in different sub- storage areas in the corresponding storage area. In the foregoing manner, the ingress buffer queue of the deterministic routing may be divided into a plurality of ingress buffer queues for different turning directions, so that a backpressure signal of a specific destination interface does not affect transmission of data packets of another destination interface. This reduces impact caused by network congestion and improves transmission efficiency of the data packets. When the foregoing method is performed, a turning direction of the first data packet may be determined based on the destination address of the first data packet and the location information of the current network node. Then, the first data packet is stored in the corresponding ingress buffer queue based on the determined turning direction. In an example, the processor in the network node may determine the turning direction of the data packet by using a third lookup table. The third lookup table may include turning directions corresponding to search keywords including different destination addresses and location information of the current network node. After obtaining the destination address of the first data packet, the processor may form a search keyword based on the destination address of the first data packet and the location information of the current network node, to obtain the corresponding turning direction from the third lookup table. In another example, the processor may also directly calculate the turning direction of the first data packet based on the destination address of the first data packet and the location information of the current network node. Based on the coordinate system in FIG. 1, a data packet whose destination interface in an ingress buffer of an N interface of a network node is an S interface is used as an example. If the location coordinates of the current network node are (X0,Y0), location coordinates of a destination network node corresponding to the destination address of the data packet are (Xd,Yd), and the manner of the deterministic routing is XY routing, the data packet may be stored in the ingress buffer queues for different turning directions in the following manner: If Xd>X0, it indicates that the data packet is turned left at a next-hop network node. Therefore, the data packet is stored in the left-turning queue L. If Xd<X0, it indicates that the data packet is turned right at a next-hop network node. Therefore, the data packet is stored in the right-turning queue R. If Xd=X0, it indicates that the data packet is straight at a next-hop network node. Therefore, the data packet is stored in the straight-through queue I. Because the network nodes are located at different locations in the 2D-mesh network, the MHD queue of each network node may be divided into ingress buffer queues for different turning directions based on the turning directions that can be actually performed by the data packets. For example, in FIG. 1, an MHD queue whose destination interface in an ingress buffer of an N interface of a network node whose location coordinates are (0,0) is an S interface can be divided only into a straight-through queue I and a left-turning queue L. An MHD queue whose destination interface in an ingress buffer of an N interface of a network node whose location coordinates are (3,0) is an S interface can be divided only into a straight-through queue I and a right-turning queue R. An MHD queue whose destination interface in an ingress buffer of an N interface of a network node whose location coordinates are (1,0) is an S interface is divided into a straight-through queue I, a left-turning queue L, and a right-turning queue R.

Certainly, the foregoing manner is merely an example provided in this embodiment of this application. A determining condition in specific implementation may be adaptively adjusted based on an actually used deterministic routing algorithm. Details are not described herein in this embodiment of this application.

In an implementation solution, still as shown in FIG. 7, each first storage area may be further used to store an ingress buffer queue (that is, an AR_back queue in FIG. 7) converted from the adaptive routing to the deterministic routing. On this basis, the first data packet may further include a conversion identifier indicating conversion from the adaptive routing to the deterministic routing. A conversion identifier bit may be set in a packet header of the data packet, and a length of the conversion identifier bit is 1 bit (bit). When the data packet is a data packet converted from the adaptive routing to the deterministic routing, the conversion identifier bit may be 1. When the data packet is not a data packet converted from the adaptive routing to the deterministic routing (that is, the data packet is a data packet of the deterministic routing or a data packet of the adaptive routing), the conversion identifier bit may be 0. In an example, if a specific data packet is first transmitted in the manner of the adaptive routing, and when the data packet is transmitted to a current network node, the current network node interacts with a next-hop network node that performs the deterministic routing to determine that an ingress buffer queue of the next-hop network node has sufficient storage space for storing the data packet, the current network node may change the conversion identifier bit in the data packet from 0 to 1, and store the data packet in the ingress buffer queue (that is, the AR_back queue) of the corresponding destination interface based on the source address, the destination address, and the conversion identifier of the data packet, and the location information of the current network node, so that the data packet is transmitted to the target network node in the manner of the deterministic routing. The current network node may send the request information to the next-hop network node periodically or aperiodically, to obtain storage space usage of the ingress buffer queue of the next-hop network node. When the storage space usage of the ingress buffer queue of the next-hop network node is lower than a specified threshold, it is determined that the ingress buffer queue of the next-hop network node has sufficient storage space for storing the data packet. In another example, the current network node may also set the conversion identifier bit to 1 when a traffic of the interface connected to the next-hop network node that performs the deterministic routing exceeds a specified threshold. During specific implementation, the operator may select a used determining manner based on an actual requirement. This is not specifically limited in this embodiment of this application. In the foregoing manner, although data packets in the AR_back queue and the MHD queue are subsequently transmitted in the manner of the deterministic routing, the two queues are isolated, so that impact of the AR_back queue on the MHD queue can be avoided. In addition, once the data packet enters the AR_back queue, the data packet is not allowed to enter the AR queue subsequently. The data packet can only be transmitted subsequently in the manner of the deterministic routing. The manner of the deterministic routing may be determined according to an actually used routing algorithm. Details are not described herein in this embodiment of this application. Further, when the data packet includes the conversion flag bit, based on the foregoing manner of determining the routing type, the processor further needs to identify the conversion flag bit, to prevent the data packet in the AR_back queue from being stored in the MHD queue.

In an implementation solution, still as shown in FIG. 7, the AR_back queue may also include a plurality of ingress buffer queues in turning directions. The processor may determine, based on the destination address of the data packet and the location information of the current network node, a turning direction of the data packet on the next-hop network node, and then store data packets in a same turning direction in a same ingress buffer queue. For the foregoing process, the data packets may also be stored in the ingress buffer queues in various turning directions in the AR_back queue with reference to a data packet storage manner of the plurality of the ingress buffer queues in the turning directions in the MHD queue. Details are not described herein in this embodiment of this application. The AR_back queue may respond to a backpressure signal of a downstream network node, but does not generate a backpressure signal. In the foregoing manner, data packets in different turning directions in the AR_back queue may also be prevented from affecting each other, so that when congestion occurs in a data packet in a specific turning direction, transmission of data packets in other turning directions is not affected. This improves transmission efficiency of the data packets.

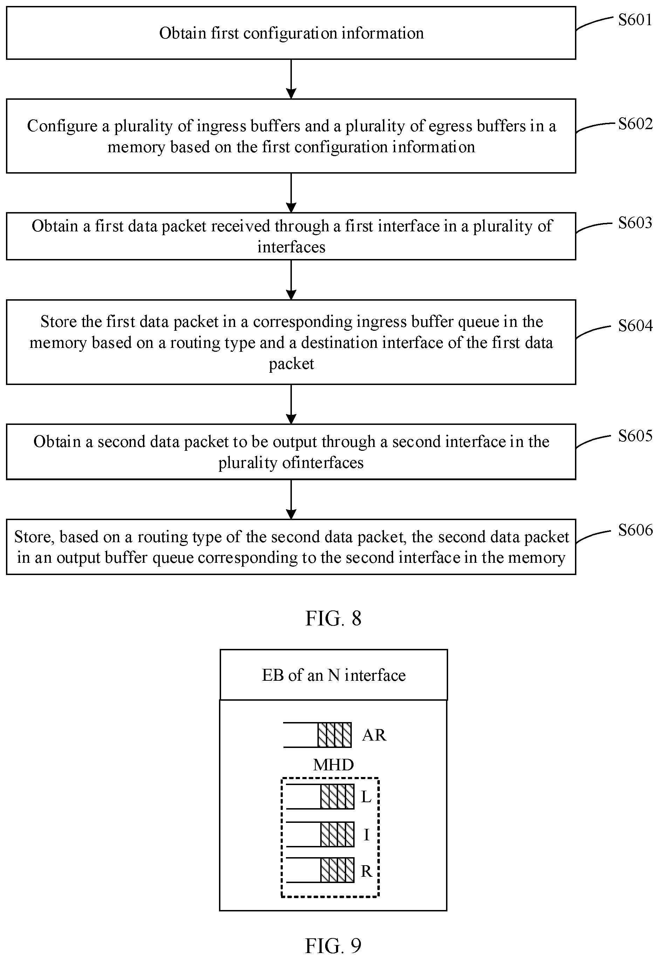

In an implementation solution, if each interface of the network node further includes an egress buffer, as shown in FIG. 8, the first configuration information may further include an indication of a storage manner of the egress buffer queue. When performing S602, the processor in the network node may further configure a plurality of egress buffers in the memory based on the first configuration information. Each egress buffer includes a plurality of second storage areas. Each egress buffer may be configured to store an egress buffer queue of one interface, and each second storage area is used to store an egress buffer queue of the deterministic routing or an egress buffer queue of the adaptive routing. On this basis, after S604, the foregoing method may further include the following steps.

S605: The processor obtains a second data packet to be output through a second interface in the plurality of interfaces.

The processor in the network node may obtain, from a corresponding storage area in an ingress buffer of another interface other than the second interface according to a first in first out principle, a data packet (that is, the second data packet) whose destination interface is the second interface. The data packet may be a data packet of the deterministic routing, or may be a data packet of the adaptive routing.

S606: The processor stores, based on the routing type of the second data packet, the second data packet in an egress buffer queue corresponding to the second interface in the memory.

The memory further includes a plurality of egress buffers. Each egress buffer corresponds to one of the plurality of interfaces. Each egress buffer includes a plurality of second storage areas. Each second storage area is used to store an egress buffer queue of the deterministic routing or an egress buffer queue of the adaptive routing. In this embodiment of this application, storage areas are divided for data packets of different destination interfaces in the ingress buffer of each interface, and each storage area is further divided into a plurality of ingress buffer queues based on the routing type. Therefore, the processor may directly read the to-be-output second data packet from the memory based on a correspondence between the data packet and the ingress buffer queue, and does not need to determine the routing type of the data packet based on the source address and the destination address of the data packet, and the location information of the current network node. This improves transmission efficiency of the data packets.

In an implementation solution, as shown in FIG. 9, the egress buffer queue of the deterministic routing includes a plurality of egress buffer queues for different turning directions. The processor may store, in the egress buffer queue corresponding to the deterministic routing of the second interface, the data packet based on the routing type and the turning direction of each data packet in the ingress buffer queue.

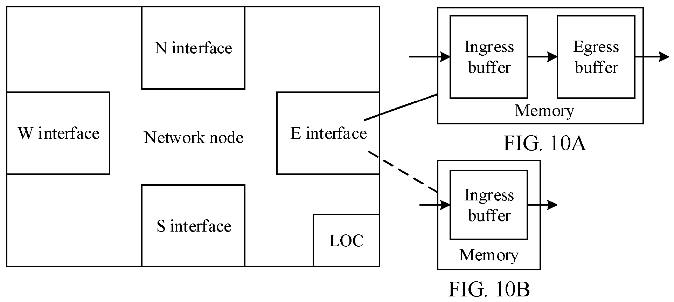

In the foregoing manner, as shown in FIG. 10A and FIG. 10B, when each interface of the network node includes only one ingress buffer (as shown in FIG. 10B), the controller may output each data packet in the ingress buffer queue through a corresponding destination interface according to a first in first out principle. When each interface of the network node includes an ingress buffer and an egress buffer (as shown in FIG. 10A), the data packet of each destination interface may be transferred from the ingress buffer to the egress buffer of the corresponding destination interface, and then output according to the first in first out principle.

It may be understood that the processor may configure the foregoing plurality of ingress buffers and/or the foregoing plurality of egress buffers in the memory based on the configuration information. Alternatively, the processor may perform this configuration action by default without depending on the configuration information.

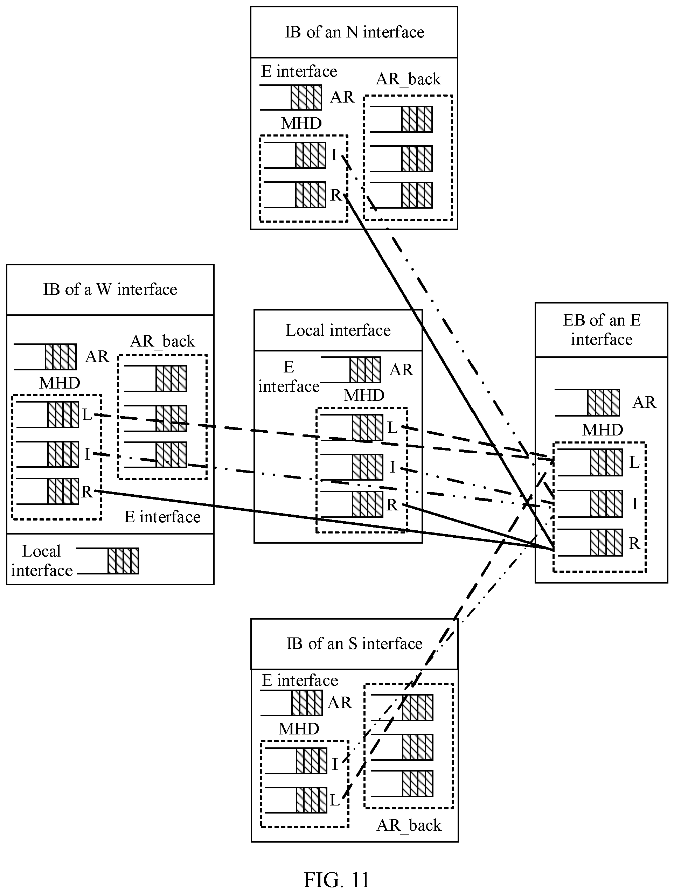

In an example, to better understand a backpressure transfer relationship between an ingress buffer and an egress buffer of a same network node, in this embodiment of this application, a network node in a 2D-mesh network is used as an example to show a backpressure relationship between an ingress buffer and an egress buffer of each interface (including the N interface, the S interface, the W interface, the E interface, and the local interface) inside the network node. An egress buffer (egress buffer, EB) of the E interface is used as an example. A backpressure transfer relationship between the egress buffer and the ingress buffers (ingress buffers, IB) of the N interface, the S interface, the W interface, and the local interface is shown in Table 1 and FIG. 11. It can be learned from Table 1 and FIG. 11 that, in the ingress buffer queue of each interface, there is a backpressure transfer relationship between the ingress buffer queue in each direction corresponding to the deterministic routing of the destination interface being the E interface and the egress buffer queue in each direction corresponding to the deterministic routing of the egress buffer queue of the E interface. It can be learned from the foregoing manner that the turning direction of the data packet does not need to be limited after the MHD queue is subdivided based on the turning direction. In addition, if backpressure is formed between a specific egress buffer queue of the interface E and an ingress buffer queue corresponding to another interface, egress buffer queues of the interface E in other turning directions and ingress buffer queues corresponding to the another interface in turning directions are not affected. This reduces impact caused by network congestion and improves transmission efficiency of the data packets.

**Table 1**

| EB of the interface E | IB of the interface W | IB of the interface E | IB of the interface N | IB of the interface S | IB of the local interface |
|---|---|---|---|---|---|
| AR | AR | / | AR | AR | AR |
| R | R | / | R | / | R |
| I | I | / | I | I | I |
| L | L | / | / | L | L |

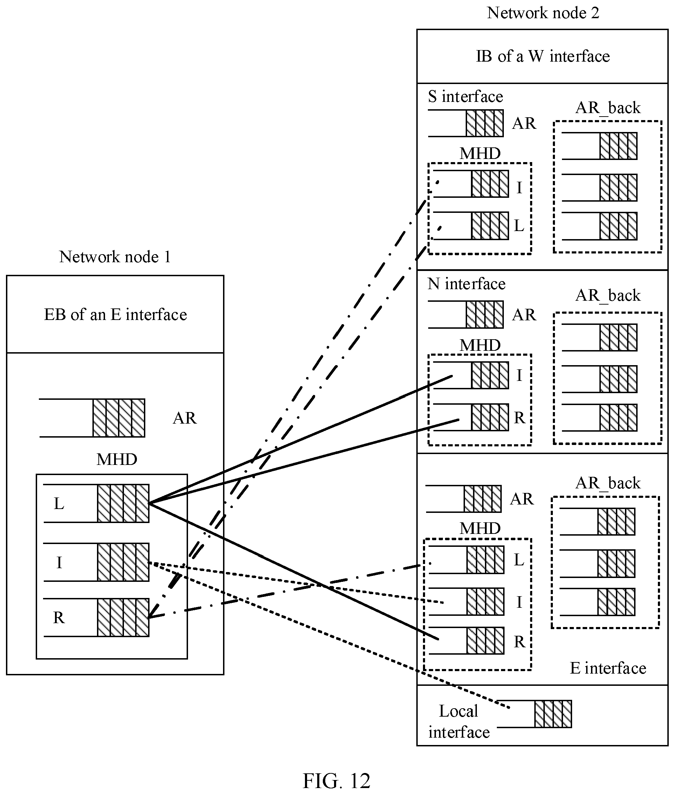

Further, two network nodes, namely, a network node 1 and a network node 2, in the 2D-mesh network are used as an example. A backpressure relationship between an egress buffer EB of an E interface of the network node 1 and an ingress buffer IB of a W interface of the network node 2 is shown in Table 2 and FIG. 12. It can be learned from Table 2 and FIG. 12 that, after a data packet in an AR queue in the EB corresponding to the E interface of the network node 1 is transmitted to the IB of the W interface of the network node 2, the data packet may continue to be stored in the AR queue, or may be converted into a data packet of the deterministic routing and stored in the AR_back queue. The data packet in the right-turning queue R of the deterministic routing in the EB corresponding to the E interface of the network node 1 may be stored in the straight-through queue I or the left-turning queue L in the MHD queue whose destination interface is the S interface in the network node 2, or the left-turning queue L in the MHD queue whose destination interface is the E interface in the network node 2. Therefore, there may be a backpressure transfer relationship between the right-turning queue R of the deterministic routing in the EB corresponding to the E interface of the network node 1 and deterministic routing ingress buffer queues that are located in the IB corresponding to the W interface of the network node 2 and that have the E interface and the S interface as destination interfaces. Similarly, there may be a backpressure transfer relationship between a straight-through queue I in the EB corresponding to the E interface of the network node 1 and the deterministic routing ingress buffer queues that are located in the IB corresponding to the W interface of the network node 2 and that have the E interface and the local interface as destination interfaces. There may be a backpressure transfer relationship between a left-turning queue L in the EB corresponding to the E interface of the network node 1 and the deterministic routing ingress buffer queues that are located in the IB corresponding to the W interface of the network node 2 and that have the N interface and the E interface as destination interfaces. The foregoing backpressure transfer relationships may be adjusted based on a connection relationship between network nodes and a possible transmission direction of a data packet. Details are not described herein in this embodiment of this application. It can be learned from the foregoing manner that, after the MHD queue is subdivided based on the turning direction, the turning direction of the data packet does not need to be limited. In addition, even if backpressure is formed between a plurality of ingress buffer queues of the downstream network node and an egress buffer queue corresponding to the upstream node, other egress buffer queues of the upstream network node in other turning directions are not affected. This can also reduce impact caused by network congestion, and improve transmission efficiency of the data packets.

**Table 2**

| | IB of the W interface of the network node 2 | | | | | | | |
|---|---|---|---|---|---|---|---|---|
| EB of the E interface of the network node 1 | Destination interface being the N interface | | Destination interface being the S interface | | Destination interface being the E interface | | Destination interface being the local interface | |
| | Queue | Backpressure | Queue | Backpressure | Queue | Backpressure | Queue | Backpressure |
| AR | AR and AR_ back | No | AR and AR_back | No | AR and AR_back | No | AR and AR_back | No |
| R | I and L | Yes | / | / | R | Yes | / | / |
| I | / | / | / | / | L | Yes | Yes | Yes |
| L | / | / | I and R | Yes | L | Yes | / | / |

In an implementation solution, an embodiment of this application further provides a network node. The network node may be a switching device like a switch or a router.

The network node may perform the communication data exchange method in any one of the possible implementations in FIG. 7 to FIG. 10A and FIG. 10B. Details are not described herein in this embodiment of this application.

In an implementation solution, an embodiment of this application further provides a chip, and the chip includes a plurality of bare dies. The plurality of bare dies form a 2D-mesh network, and each bare die is the foregoing network node. The chip may be a system on chip SoC, and the 2D-mesh network including the plurality of bare dies may be an NOC module on the SoC. The NOC module may be coupled to a plurality of execution units on the SoC.

In an implementation solution, an embodiment of this application further provides a computer-readable storage medium. The computer-readable storage medium stores computer program instructions. When the computer program instructions are executed by a processor, the foregoing communication data exchange method may be implemented. The computer-readable storage medium may be a magnetic medium (for example, a floppy disk, a hard disk, or a magnetic tape), an optical medium (for example, a DVD), a semiconductor medium (for example, a solid state disk (Solid State Disk, SSD)), or the like. This is not specifically limited in this embodiment of this application.

The memory in embodiments of this application may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAM may be used, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the system and method described in this specification is intended to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and module, refer to a corresponding process in the foregoing method embodiment. Details are not described herein again.

In the several embodiments provided in this application, it should be understood that, the disclosed system, device, and the like may be implemented in other manners. For example, the described device embodiment is merely an example. For example, division into modules is merely logical function division and may be other division during actual implementation. For example, a plurality of modules or components may be combined or may be integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as modules may or may not be physical modules, and may be located in one device or may be distributed on a plurality of devices. Some or all the modules may be selected according to actual needs to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication data exchange method, applied to a network node, wherein the network node comprises a plurality of interfaces, a memory, and a processor, the processor is separately coupled to the memory and the plurality of interfaces, the method is performed based on the processor, and the method comprises:
obtaining a first data packet received through a first interface in the plurality of interfaces; and
storing the first data packet in a corresponding ingress buffer queue in the memory based on a routing type and a destination interface of the first data packet, wherein the memory comprises a plurality of ingress buffers, each ingress buffer corresponds to one of the plurality of interfaces, each ingress buffer comprises a plurality of first storage areas, each first storage area is used to store a plurality of ingress buffer queues of a same destination interface, each ingress buffer queue corresponds to one routing type, and the destination interface is any interface other than an ingress interface of a data packet in the plurality of interfaces; and the routing type comprises deterministic routing and adaptive routing, the deterministic routing is routing for forwarding a data packet with a same source address and destination address via a fixed network node, and the adaptive routing is routing for determining a next-hop network node based on congestion of each of the plurality of interfaces.

2. The method according to claim 1, wherein the method further comprises:
determining the routing type of the first data packet based on a source address and a destination address of the first data packet and location information of the network node; and
determining the destination interface of the first data packet based on the destination address of the first data packet and the location information of the network node.

3. The method according to claim 1 or 2, wherein an ingress buffer queue of the deterministic routing comprises a plurality of ingress buffer queues for different turning directions, and the turning direction is a direction of a destination network node, corresponding to a destination address of a data packet, relative to the destination interface of the network node; and the method further comprises:
determining a turning direction of the first data packet based on the destination address of the first data packet and the location information of the network node; and
storing the first data packet in the corresponding ingress buffer queue based on the turning direction.

4. The method according to any one of claims 1 to 3, wherein the first storage area is further used to store an ingress buffer queue of the deterministic routing converted from the adaptive routing, and the first data packet further comprises a conversion identifier indicating conversion from the adaptive routing to the deterministic routing; and the method further comprises:
storing the first data packet in the corresponding ingress buffer queue based on the source address, the destination address, and the conversion identifier of the first data packet, and the location information of the current network node.

5. The method according to any one of claims 1 to 4, wherein the method further comprises:
obtaining a second data packet to be output through a second interface in the plurality of interfaces, wherein the second data packet is a data packet whose destination interface is the second interface and that is obtained from a corresponding storage area in an ingress buffer of another interface other than the second interface; and
storing the second data packet in an egress buffer queue corresponding to the second interface in the memory based on a routing type of the second data packet, wherein the memory comprises a plurality of egress buffers, each egress buffer corresponds to one of the plurality of interfaces, each egress buffer comprises a plurality of second storage areas, each second storage area is used to store an egress buffer queue of one routing type, and the routing type comprises the deterministic routing and the adaptive routing.

6. The method according to claim 5, wherein an egress buffer queue of the deterministic routing comprises a plurality of egress buffer queues for different turning directions; and when the second data packet is a data packet of the deterministic routing, storing the second data packet in the corresponding egress buffer queue in the memory based on the routing type of the second data packet specifically comprises:
storing, based on the routing type and a turning direction of the second data packet, the second data packet in the egress buffer queue corresponding to the deterministic routing of the second interface.

7. The method according to any one of claims 1 to 6, wherein the method further comprises:
obtaining first configuration information, wherein the first configuration information comprises an indication of a storage manner of an ingress buffer queue; and
configuring the plurality of ingress buffers in the memory based on the first configuration information.

8. The method according to claim 6 or 7, wherein the first configuration information further comprises an indication of a storage manner of an egress buffer queue; and the method further comprises:
configuring the plurality of egress buffers in the memory based on the first configuration information.

9. A communication apparatus, wherein the communication apparatus comprises a plurality of interfaces, a memory, and a processor, wherein the processor is separately coupled to the memory and the plurality of interfaces, wherein the memory comprises a plurality of ingress buffers, each ingress buffer corresponds to one of the plurality of interfaces, each ingress buffer comprises a plurality of first storage areas, each first storage area is used to store a plurality of ingress buffer queues of a same destination interface, and each ingress buffer queue corresponds to one routing type; the destination interface is any interface other than an ingress interface of a data packet in the plurality of interfaces; the routing type comprises deterministic routing and adaptive routing, and the deterministic routing is routing for forwarding a data packet with a same source address and destination address via a fixed communication apparatus; and the adaptive routing is routing for determining a next-hop communication apparatus based on congestion of each of the plurality of interfaces; and
each ingress buffer queue is used to store a data packet of a corresponding destination interface and a corresponding routing type.

10. The communication apparatus according to claim 9, wherein
the processor is configured to store a first data packet in a corresponding ingress buffer queue in the memory based on a routing type and a destination interface of the first data packet.

11. The communication apparatus according to claim 10, wherein the processor is further configured to:
determine the routing type of the first data packet based on a source address and a destination address of the first data packet and location information of the communication apparatus; and
determine the destination interface of the first data packet based on the destination address of the first data packet and the location information of the communication apparatus.

12. The communication apparatus according to any one of claims 9 to 11, wherein an ingress buffer queue of the deterministic routing comprises a plurality of ingress buffer queues for different turning directions, and the turning direction is a direction of a communication apparatus, corresponding to a destination address of a data packet, relative to a destination interface of the communication apparatus; and the processor is further configured to:
determine a turning direction of the first data packet based on the destination address of the first data packet and the location information of the communication apparatus; and
store the first data packet in the corresponding ingress buffer queue based on the turning direction.

13. The communication apparatus according to any one of claims 9 to 12, wherein each first storage area is further used to store an ingress buffer queue of the deterministic routing converted from the adaptive routing, and the first data packet further comprises a conversion identifier indicating conversion from the adaptive routing to the deterministic routing; and the processor is further configured to:
store the first data packet in the corresponding ingress buffer queue based on the source address, the destination address, and the conversion identifier of the first data packet, and the location information of the current communication apparatus.

14. The communication apparatus according to any one of claims 9 to 13, wherein the processor is further configured to:
obtain a second data packet to be output through a second interface in the plurality of interfaces, wherein the second data packet is a data packet whose destination interface is the second interface and that is obtained from a corresponding storage area in an ingress buffer of another interface other than the second interface; and
store the second data packet in an egress buffer queue corresponding to the second interface in the memory based on a routing type of the second data packet, wherein the memory comprises a plurality of egress buffers, each egress buffer corresponds to one of the plurality of interfaces, each egress buffer comprises a plurality of second storage areas, each second storage area is used to store an egress buffer queue of one routing type, and the routing type comprises the deterministic routing and the adaptive routing.

15. The communication apparatus according to claim 14, wherein an egress buffer queue of the deterministic routing comprises a plurality of egress buffer queues for different turning directions; and when the second data packet is a data packet of the deterministic routing, the processor is specifically configured to:
store, based on the routing type and a turning direction of the second data packet, the second data packet in the egress buffer queue corresponding to the deterministic routing of the second interface.

16. The communication apparatus according to any one of claims 9 to 14, wherein the processor is further configured to:
obtain first configuration information, wherein the first configuration information comprises an indication of a storage manner of an ingress buffer queue; and
configure the plurality of ingress buffers in the memory based on the first configuration information.

17. The communication apparatus according to claim 16, wherein the first configuration information further comprises an indication of a storage manner of an egress buffer queue, and the processor is further configured to:
configure the plurality of egress buffers in the memory based on the first configuration information.

18. A chip, comprising a plurality of bare dies, wherein the plurality of bare dies form a 2D-mesh network, and each bare die is the communication apparatus according to any one of claims 9 to 17.

19. A computer-readable storage medium, storing computer program instructions, wherein when the computer program instructions are executed by a processor, the method according to any one of claims 1 to 8 is implemented.

20. A communication system, comprising a plurality of switching devices, wherein the plurality of switching devices form a 2D-mesh network, and each switching device is the communication apparatus according to any one of claims 9 to 17.
